# FASCICULE DE BREVET EUROPEEN

(11) **EP 3 010 799 B1**
(45) Date de publication et mention de la délivrance du brevet: **07.11.2018**
(21) Numéro de dépôt: 14735616.6
(22) Date de dépôt: 12.06.2014
(51) Int. Cl.: B64C 11/34, F04D 29/36

(54) **PIVOT DE PALE D'HELICE AERIENNE EN FORME DE CALOTTE SPHERIQUE**
SPHÄRISCH GEFORMTER PROPELLERBLATTFUSS
PROPELLER BLADE PIVOT COMPRISING A SPHERICAL CAP

(30) Priorité: 17.06.2013 FR 1355627
(43) Date de publication de la demande: 27.04.2016
(73) Titulaire: Safran Aircraft Engines, 75015 Paris (FR)
(72) Inventeur: TAJAN, Sébastien, F-77550 Moissy-Cramayel Cedex (FR); FABRE, Adrien, Jacques, Philippe, F-77550 Moissy-Cramayel Cedex (FR); JACQUEMARD, Christophe, F-77550 Moissy-Cramayel Cedex (FR); LAURENCEAU, Adrien, F-77550 Moissy-Cramayel Cedex (FR)
(74) Mandataire: Desormiere, Pierre-Louis
(86) Numéro de dépôt international: PCT/FR2014/051441
(87) Numéro de publication internationale: WO 2014/202873

(56) Documents cités:
- FR-A1- 2 572 769
- FR-A1- 2 957 329
- FR-A5- 2 105 914
- US-A- 2 844 303

## Description

### Arrière-plan de l'invention

La présente invention se rapporte au domaine général des hélices aériennes. Elle vise plus précisément un pivot de pale d'hélice.

Une hélice aérienne est utilisée notamment dans le domaine aéronautique pour assurer la propulsion d'un aéronef. Il s'agit en particulier des turbopropulseurs d'aéronef à simple hélice ou à double hélices contrarotatives.

Typiquement, les hélices d'un turbopropulseur d'aéronef se composent chacune d'une pluralité de pales de soufflante non carénées. Ces pales de soufflante sont à pas variable, c'est-à-dire que chaque pale peut pivoter autour de son axe longitudinal (appelé axe de calage) afin d'adapter l'orientation de son bord d'attaque au régime moteur. L'orientation des pales de soufflante (on parle également de réglage du pas) constitue ainsi l'un des paramètres permettant de gérer la poussée du turbopropulseur.

A cet effet, chaque pale d'hélice est généralement montée par son pied sur un pivot comprenant un support rotatif disposé radialement dans un orifice d'un moyeu d'hélice tout en étant apte à pouvoir pivoter dans cet orifice autour d'un axe longitudinal de la pale.

Chaque pivot de pale comprend également un support de pale muni d'une alvéole destinée à recevoir un pied de pale et au moins un bras s'étendant latéralement par rapport à l'axe de pivotement du pivot et portant une masselotte formant contrepoids. En cas d'arrêt du moteur, la force centrifuge s'exerçant sur la masselotte positionnée sur le bras du pivot permet ainsi d'assurer une mise en drapeau automatique de la pale et son maintien dans cette orientation.

Le pivot d'une pale d'hélice a donc pour principales fonctions de tenir la pale (contre les forces aérodynamique et centrifuge), de tenir les masselottes de mise en drapeau de la pale (contre la force centrifuge essentiellement) et d'assurer un guidage en orientation de la pale (contre les forces inertielles principalement).

Les pivots de pale sont généralement réalisés en métal, en particulier en acier ou en titane. Or, le grand nombre de pales, en particulier dans le cas d'un turbopropulseur à double hélices contrarotatives, multiplie le nombre de pivots et donc la masse embarquée.

Il existe donc besoin de pouvoir disposer d'une géométrie de pivot de pale permettant d'obtenir un gain de masse, notamment compte tenu des efforts exercés par la force centrifuge sur les masselottes formant contrepoids.

Des pales pivotantes connues sont décrites dans US 2 844 303.

### Objet et résumé de l'invention

Ce but est atteint grâce à un pivot de pale d'hélice aérienne, comportant un support rotatif destiné à être disposé radialement sur un moyeu d'hélice tout en étant apte à pouvoir pivoter autour d'un axe de pivotement, et un support de pale comprenant un logement destiné à recevoir un pied de pale et au moins un bras s'étendant latéralement par rapport à l'axe de pivotement et portant une masselotte formant contrepoids, et dans lequel, conformément à l'invention, le bras et sa masselotte présentent une forme géométrique générale de calotte sphérique.

La force centrifuge qui s'exerce sur le bras du pivot de pale tend à faire fléchir celui-ci. La forme générale de calotte sphérique du bras et de sa masselotte permet d'accroître son efficacité structurelle en assurant une meilleure distribution des contraintes de traction et de compression induites par la flexion du bras. Il en résulte en un allègement possible de la masse du pivot de pale.

De plus, la forme voûtée du support de pale facilite l'intégration du pivot de pale dans la nacelle (celle-ci présentant une forme cylindrique ou une forme à double courbure). Notamment, grâce à une telle forme, l'encombrement radial du pivot de pale peut être réduit.

De préférence, le bras et sa masselotte comprennent une section courbe dans un plan longitudinal et une section courbe dans un plan transversal. Dans ce cas, les sections courbes peuvent posséder chacune un rayon de courbure compris entre 200mm et 400mm pour une pale d'hélice de turbopropulseur et compris entre 700mm et 900mm pour une pale d'hélice de turbopropulseur à double hélices contrarotatives.

De préférence également, au moins le support de pale est réalisé en matériau composite à matrice organique. La réalisation de la principale partie du pivot d'hélice en matériau composite permet d'atteindre un allègement significatif de l'ordre de 30 à 50% par rapport à un pivot d'hélice de l'art antérieur en métal.

Le support de pale peut comprendre deux bras opposés s'étendant latéralement par rapport à l'axe de pivotement et portant chacun une masselotte formant contrepoids.

Selon un mode de réalisation, le bras du support de pale se raccorde au logement par une portion à profil courbé. Le cheminement entre le bras et la région centrale du pivot munie du logement est ici continu, ce qui favorise davantage la distribution des contraintes de traction et de compression induites par la flexion des bras. Notamment, lorsque le support de pale comprend deux bras opposés, ceux-ci se raccordent sur le logement et cheminent également en amont et en aval de celui-ci. Ainsi, en cas de recours à un matériau composite pour la réalisation de ce support de pale, la section de composite est maximisée dans une région où les contraintes induites par la flexion des bras sont importants.

Selon un autre mode de réalisation, le bras du support de pale se raccorde au logement par une portion à profil rectiligne. Par rapport au mode de réalisation précédent, un tel raccordement par une portion à profil rectiligne permet d'obtenir un gain de masse substantiel.

Le logement du support de pale peut être une alvéole orientée selon une direction sensiblement perpendiculaire au bras.

L'invention a également pour objet une hélice aérienne comprenant une pluralité de pales montées chacune dans un pivot tel que défini précédemment. L'invention a encore pour objet un turbopropulseur d'aéronef comprenant au moins une telle hélice.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 est une vue schématique en demi-coupe longitudinale d'un turbopropulseur à double hélices non carénées auquel s'applique notamment l'invention ;
- la figure 2 est une vue schématique montrant le fonctionnement d'un pivot de pale d'hélice ;
- les figures 3 et 4 sont des vues en perspective d'un pivot de pale d'hélice selon un premier mode de réalisation de l'invention, respectivement en vue de dessus et en vue de dessous ;
- la figure 5 est une vue en coupe longitudinale du pivot des figures 3 et 4 ;
- la figure 6 est une vue en coupe transversale du pivot des figures 3 et 4 ;
- les figures 7 et 8 sont des vues en perspective d'un pivot de pale d'hélice selon un deuxième mode de réalisation de l'invention, respectivement en vue de dessus et en vue de dessous ; et
- la figure 9 est une vue en coupe longitudinale d'un pivot de pale d'hélice selon un troisième mode de réalisation de l'invention.

### Description détaillée de l'invention

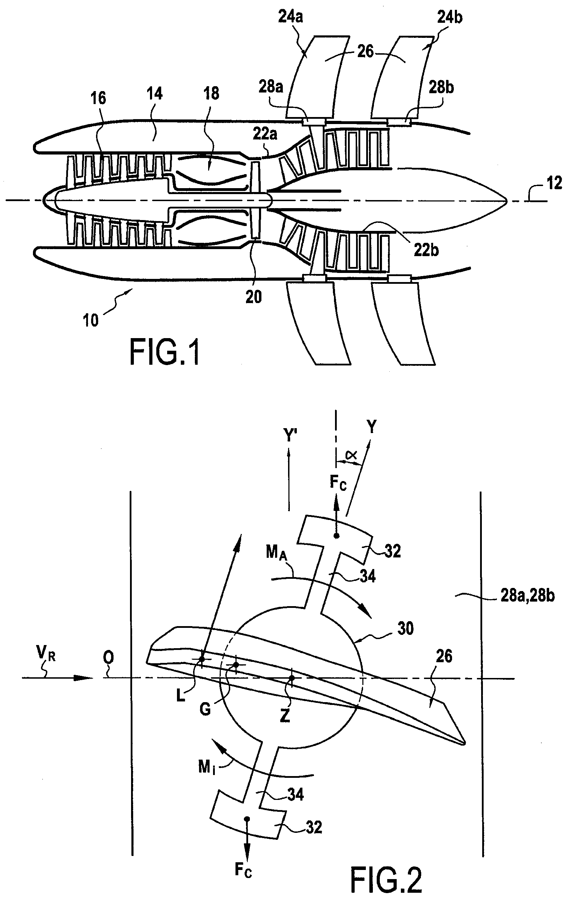

L'invention s'applique à tous turbopropulseurs d'aéronef munis d'au moins une hélice de pales à calage variable, et en particulier aux turbopropulseurs d'avion à double hélices contrarotatives non carénées tels que celui représenté sur la figure 1.

Un tel turbopropulseur 10 est connu et ne sera donc pas décrit en détails. Typiquement, il comprend notamment un axe longitudinal 12 et une nacelle annulaire 14 disposée coaxialement autour de l'axe longitudinal. Le turbopropulseur 10 comprend outre, d'amont en aval, un compresseur 16, une chambre de combustion 18 et une turbine 20 à deux rotors contrarotatifs 22a, 22b, ces différents éléments étant également disposés coaxialement autour de l'axe longitudinal 12 du turbopropulseur.

Le turbopropulseur 10 comprend encore une hélice amont (ou avant) 24a et une hélice aval (ou arrière) 24b de pales de soufflante 26 à orientation réglable. Les pales de soufflante 26 de chaque hélice 24a, 24b sont plus précisément montées sur un anneau rotatif 28a, 28b centrée sur l'axe longitudinal 12 du turbopropulseur. Chaque rotor 22a, 22b de la turbine 20 porte et entraîne en rotation l'un des anneaux rotatifs 28a, 28b sur lequel est montée l'une des hélices 24a, 24b. Alternativement, les hélices 24a, 24b pourraient être entraînées en rotation par un même et unique rotor de la turbine par l'intermédiaire d'une boîte réductrice.

Les pales de soufflante 26 des deux hélices 24a, 24b sont à orientation réglable, c'est-à-dire qu'elles peuvent pivoter chacune autour de leur axe longitudinal afin d'adapter l'orientation de leur bord d'attaque au régime moteur et/ou aux commandes du pilote.

A cet effet, comme représenté sur la figure 2, chaque pale de soufflante 26 est montée sur un pivot 30 destiné à être monté radialement sur l'anneau rotatif 28a, 28b respectif tout en étant apte à pouvoir pivoter dans cet orifice autour d'un axe de pivotement Z du pivot. Le pivotement du pivot 30 par rapport à l'anneau rotatif 28a, 28b entraîne ainsi un changement d'orientation du bord d'attaque de la pale de soufflante correspondante. Ce pivotement est obtenu par des dispositifs d'actionnement connus en soi de type hydrauliques ou électriques.

En cas de panne moteur, il est avantageux que chaque pale de soufflante 26 puisse être mise automatiquement en drapeau, c'est-à-dire avec un angle d'attaque sensiblement nul par rapport au vent relatif V_{R}. De plus, il est prévu des moyens passifs pour maintenir les pales de soufflante 26 en drapeau même en cas de défaillance des dispositifs d'actionnement du pivotement des pivots 30. En effet, le centre de poussée L de chaque pale peut être décalé par rapport à l'axe de pivotement Z du pivot 30, générant ainsi un couple aérodynamique M_{A} tendant à faire pivoter la pale. En outre, un couple inertiel Mᵢ est engendré aussi, du fait du déport du centre de gravité G de la pale par rapport à l'axe de pivotement Z.

Pour contrer ces couples M_{A}, et Mᵢ et maintenir la pale en drapeau, des masselottes 32 formant contrepoids sont typiquement montées à l'extrémité libre de bras 34 s'étendant latéralement par rapport à l'axe de pivotement Z. L'orientation de ces bras est sensiblement perpendiculaire à l'intrados et à l'extrados de la pale 30 (angle α compris entre +/-30° par rapport à un plan normal à l'alvéole du pivot recevant le pied de pale), de telle manière que, quand l'hélice tourne autour de son axe de rotation O, les forces centrifuges F_{c} s'exerçant sur les masselottes 32 auront tendance à aligner la direction principale Y des bras 34 avec une direction tangentielle Y' de l'hélice, contrant ainsi les couples aérodynamique et inertiel M_{A} et Mᵢ et réalignant la pale avec la direction du vent relatif V_{R}.

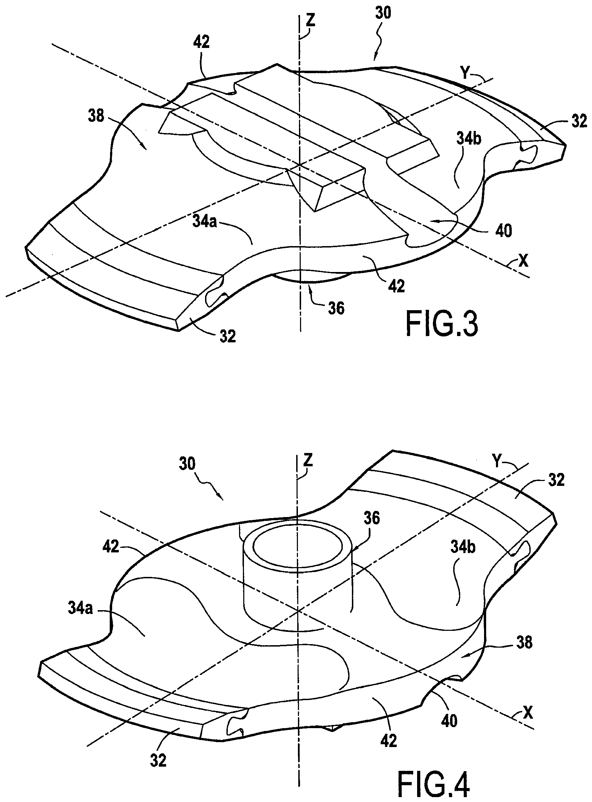

Les figures 3 et 4 représentent en perspective un pivot 30 de pale d'hélice selon un premier mode de réalisation de l'invention.

Dans ce mode de réalisation, le pivot 30 de pale d'hélice comprend un support rotatif 36 et un support de pale 38. Le support rotatif 36 se présente sous la forme d'un cylindre creux centré sur l'axe de pivotement Z du pivot. Ce support rotatif 36 est destiné à être monté radialement sur l'anneau rotatif respectif du turbopropulseur tout en étant capable de pouvoir pivoter autour de l'axe de pivotement Z.

Quant au support de pale 38, il comprend notamment un logement, par exemple une alvéole 40 en forme de rainure, qui est destiné à recevoir un pied de pale, et deux bras 34 opposés (à savoir un bras intrados 34a et un bras extrados 34b) s'étendant latéralement par rapport à l'axe de pivotement Z depuis l'alvéole.

Sur les exemples illustrés par les figures, le logement pour le pied de pale présente une forme de rainure. Bien entendu, il est possible d'envisager d'autres types de logement en fonction de l'application choisie, notamment un logement cylindrique lorsque le pied de pale présente une forme cylindrique.

Les bras 34 s'étendant selon une direction Y perpendiculaire à l'axe de pivotement Z et l'alvéole 40 s'étend selon une direction X perpendiculaire à l'axe de pivotement Z et à la direction Y des bras 34a, 34b. De plus, chaque bras porte à son extrémité libre une masselotte 32 formant contrepoids.

Selon l'invention, chaque bras 34a, 34b et sa masselotte 32 présentent une forme géométrique générale de calotte sphérique.

Par « forme de calotte sphérique », on entend ici que chaque bras et la masselotte qu'il porte présentent une forme d'une partie de sphère qui serait tronquée par un plan (autre qu'un plan médian).

En d'autres termes, le bras et sa masselotte présentent une forme qui est voûtée vers l'intérieur (c'est-à-dire vers le support rotatif 36) avec une double courbure.

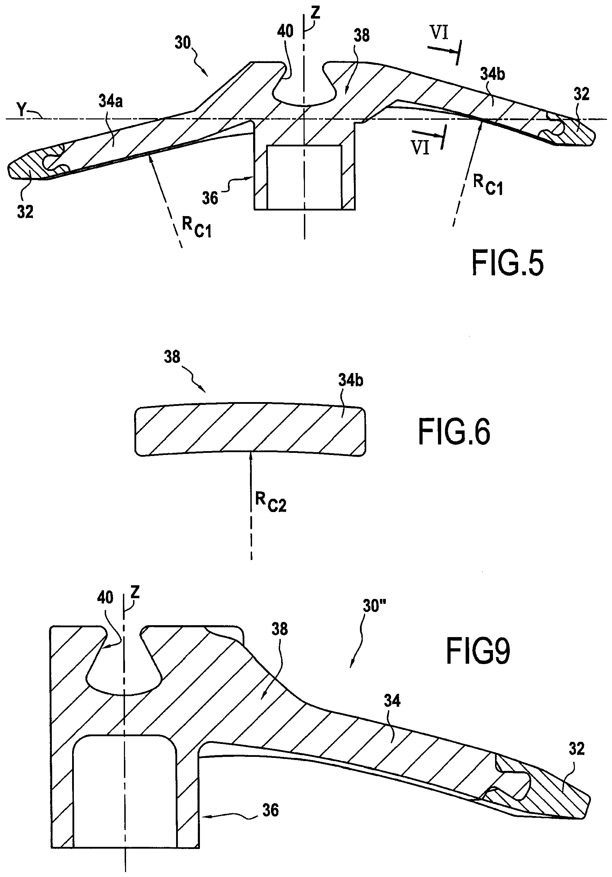

Ainsi, comme représenté sur la figure 5 qui est une vue en coupe longitudinale du pivot 30 (c'est-à-dire une vue dans le plan défini par l'axe de pivotement Z et la direction Y des bras 34), chaque bras 34a, 34b et sa masselotte 32 présentent une section courbe avec un premier rayon de courbure R_{c1}.

De même, la figure 6 montre le pivot de pale d'hélice du premier mode de réalisation dans une vue en coupe transversale, c'est-à-dire une vue dans un plan défini par l'axe de pivotement Z et la direction X de l'alvéole 40 (la figure 6 est aussi une vue en coupe selon VI-VI de la figure 5).

Dans ce plan transversal, le bras extrados 34b et sa masselotte 32 présentent également une section courbe avec un second rayon de courbure R_{c2}. Bien que non représenté sur les figures, le bras intrados 32b et sa masselotte présentent aussi une section courbe dans ce plan transversal.

Pour un pivot dont la distance entre les centres de gravité des masselottes 32 et l'axe de pivotement Z est compris entre 100mm et 300mm, les rayons de courbure R_{c1} et R_{c2} seront compris entre 200mm et 400mm (pour une pale d'hélice de turbopropulseur) et entre 700mm et 900mm (pour une pale d'hélice de turbopropulseur à double hélices contra rotatives).

On notera que, lorsque le pivot présente deux bras munis de masselottes, l'écart entre les distances radiales des centres de gravité des deux masselottes par rapport à l'axe de pivotement Z devra être minimisé.

De plus, toujours dans ce cas de la présence de deux bras, la position radiale des masselottes sera de préférence différente afin d'éviter tout conflit lors de la rotation des pivots les uns par rapport aux autres. En d'autres termes, les rayons de courbure R_{c1} seront différents pour le bras intrados 34a et le bras extrados 34b d'un même pivot.

Dans le premier mode de réalisation, les deux bras 34a, 34b du support de pale 38 se raccordent à l'alvéole 40 par des portions 42 à profil courbé.

Le cheminement entre les bras 34a, 34b et la région centrale du pivot munie de l'alvéole 40 est ainsi continu, ce qui favorise davantage la distribution des contraintes de traction et de compression induites par la flexion des bras. Notamment, les bras se raccordent sur l'alvéole et cheminent également en amont et en aval de celle-ci en conservant leur double courbure (dans les plans X-Z et Y-Z).

De la sorte, en cas de recours à un matériau composite pour la réalisation de ce support de pale, la section de composite est maximisée dans une région où les contraintes induites par la flexion des bras sont importantes.

On notera que les bras pourront être des éléments rapportés sur le support de pale, par exemple au moyen d'un assemblage de type boulonnerie ou par coopération de forme mâle/femelle.

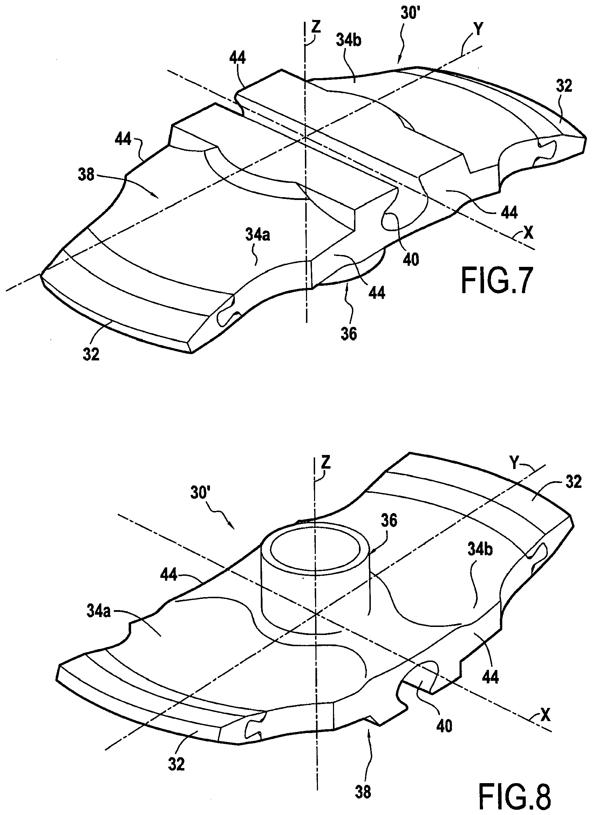

Les figures 7 et 8 illustrent en perspective un pivot 30' de pale d'hélice selon un deuxième mode de réalisation de l'invention.

Ce pivot 30' se distingue de celui décrit précédemment en ce que les deux bras 34a, 34b du support de pale 38 se raccordent à l'alvéole 40 par des portions 44 à profil rectiligne. En d'autres termes, la région centrale du pivot munie de l'alvéole 40 est tronquée par rapport à celle illustrée sur les figures 5 et 6. Ainsi, par rapport au mode de réalisation précédent, le pivot 30' de pale présente une masse allégée.

La figure 9 représente, en coupe longitudinale, un pivot 30" de pale d'hélice selon un troisième mode de réalisation. Dans ce mode de réalisation, le support de pale 38 ne comprend qu'un seul bras 34. Les autres caractéristiques sont identiques à celles décrites en liaison avec l'un ou l'autre des deux modes de réalisation précédemment décrits. En particulier, le bras 34 et sa masselotte 32 présentent ici également une forme géométrique générale de calotte sphérique.

Selon une disposition avantageuse commune à l'ensemble des modes de réalisation décrits, au moins le support de pale (et éventuellement également le support rotatif) est réalisé en matériau composite à matrice organique.

Typiquement, le matériau composite à matrice organique utilisé comprend des fibres noyées dans une matrice organique, et plus spécifiquement polymérique. Ces fibres peuvent notamment être des fibres de carbone, des fibres de verre, des fibres de polyamide, ou de polyéthylène, etc. Ces fibres peuvent être arrangées par couches unidirectionelles, tissées en deux ou trois dimensions et/ou tressées. Elles sont noyées dans une matrice organique, plus spécifiquement polymérique, qui peut notamment être formée par une résine thermodurcissable, telle que la résine d'époxy, ou d'autres résines thermodurcissables mieux adaptées aux hautes températures.

On pourra se référer aux demandes de brevet français n° 13 54427 et n° 13 54428 déposées la Demanderesse le 17 mai 2013.

Ces demandes de brevet décrivent différentes variantes de réalisation d'un pivot de pale d'hélice réalisé au moins en partie en matériau composite à matrice organique.

## Revendications

1. Pivot (30 ; 30' ; 30') de pale d'hélice aérienne, comportant :
un support rotatif (36) destiné à être monté radialement sur un moyeu d'hélice tout en étant apte à pouvoir pivoter autour d'un axe de pivotement (Z) ; et
un support de pale (38) comprenant un logement (40) destiné à recevoir un pied de pale et au moins un bras (34) s'étendant latéralement par rapport à l'axe de pivotement et portant une masselotte (32) formant contrepoids ;
**caractérisé en ce que** le bras et sa masselotte présentent une forme géométrique générale de calotte sphérique voûtée vers le support rotatif (36) avec une double courbure, le bras et sa masselotte présentant une première section courbe dans un plan longitudinal défini par l'axe de pivotement (Z) et la direction (Y) du bras, et une seconde section courbe dans un plan transversal défini par l'axe de pivotement (Z) et la direction (X) du logement.

2. Pivot selon la revendication 1, dans lequel le bras et sa masselotte comprennent une section courbe dans un plan longitudinal et une section courbe dans un plan transversal.

3. Pivot selon la revendication 2, dans lequel les sections courbes possèdent chacune un rayon de courbure (R_{C1}, R_{C2}) compris entre 200mm et 400mm pour une pale d'hélice de turbopropulseur et compris entre 700mm et 900mm pour une pale d'hélice de turbopropulseur à double hélices contrarotatives.

4. Pivot selon l'une quelconque des revendications 1 à 3, dans lequel au moins le support de pale est réalisé en matériau composite à matrice organique.

5. Pivot selon l'une quelconque des revendications 1 à 4, dans lequel le support de pale comprend deux bras opposés s'étendant latéralement par rapport à l'axe de pivotement et portant chacun une masselotte formant contrepoids.

6. Pivot selon l'une quelconque des revendications 1 à 5, dans lequel le bras du support de pale se raccorde au logement par une portion (42) à profil courbé.

7. Pivot selon l'une quelconque des revendications 1 à 5, dans lequel le bras du support de pale se raccorde au logement par une portion (44) à profil rectiligne.

8. Pivot selon l'une quelconque des revendications 1 à 7, dans lequel le logement du support de pale est une alvéole (40) orientée selon une direction (X) sensiblement perpendiculaire au bras.

9. Hélice aérienne (24a, 24b) comprenant une pluralité de pales (26) montées chacune dans un pivot (30; 30'; 30') selon l'une quelconque des revendications 1 à 8.

10. Turbopropulseur (10) d'aéronef comprenant au moins une hélice (24a, 24b) selon la revendication 9.

## Patentansprüche

1. Drehgelenk (30; 30'; 30') eines Luftpropellerblattes, umfassend:
eine drehbare Halterung (36), die dazu bestimmt ist, an einer Propellernabe radial angebracht zu werden, und gleichzeitig geeignet ist, um eine Schwenkachse (Z) verschwenken zu können, und
eine Blatthalterung (38) mit einer Aufnahme (40), welche dazu bestimmt ist, einen Blattfuß aufzunehmen, und wenigstens einem Arm (34), welcher sich in Bezug auf die Schwenkachse seitlich erstreckt und ein ein Gegengewicht bildendes Fliehgewicht (32) trägt,
**dadurch gekennzeichnet, dass** der Arm und sein Fliehgewicht eine geometrische Gesamtform einer Kugelkalotte aufweisen, die in Richtung der drehbaren Halterung (36) mit einer zweifachen Krümmung gewölbt ist, wobei der Arm und sein Fliehgewicht einen ersten gekrümmten Abschnitt in einer Längsebene, welche durch die Schwenkachse (Z) und die Richtung (Y) des Armes definiert ist, sowie einen zweiten gekrümmten Abschnitt in einer Querebene, welche durch die Schwenkachse (Z) und die Richtung (X) der Aufnahme definiert ist, aufweisen.

2. Drehgelenk nach Anspruch 1, bei dem der Arm und sein Fliehgewicht einen gekrümmten Abschnitt in einer Längsebene und einen gekrümmten Abschnitt in einer Querebene aufweisen.

3. Drehgelenk nach Anspruch 2, bei dem die gekrümmten Abschnitte jeweils einen Krümmungsradius (R_{C1}, R_{C2}) im Bereich zwischen 200 mm und 400 mm für ein Propellerblatt eines Turboprop-Triebwerkes und im Bereich zwischen 700 mm und 900 mm für ein Propellerblatt eines Turboprop-Triebwerkes mit gegenläufigen Doppelpropellern besitzen.

4. Drehgelenk nach einem der Ansprüche 1 bis 3, bei dem wenigstens die Blatthalterung aus Verbundwerkstoff mit organischer Matrix hergestellt ist.

5. Drehgelenk nach einem der Ansprüche 1 bis 4, bei dem die Blatthalterung zwei gegenüberliegende Arme umfasst, die sich in Bezug auf die Schwenkachse seitlich erstrecken und jeweils ein ein Gegengewicht bildendes Fliehgewicht tragen.

6. Drehgelenk nach einem der Ansprüche 1 bis 5, bei dem der Arm der Blatthalterung über einen Abschnitt (42) mit gekrümmtem Profil an die Aufnahme anschließt.

7. Drehgelenk nach einem der Ansprüche 1 bis 5, bei dem der Arm der Blatthalterung über einen Abschnitt (44) mit geradlinigem Profil an die Aufnahme anschließt.

8. Drehgelenk nach einem der Ansprüche 1 bis 7, bei dem die Aufnahme der Blatthalterung eine Vertiefung (40) ist, die in einer zu dem Arm im Wesentlichen senkrechten Richtung (X) ausgerichtet ist.

9. Luftpropeller (24a, 24b), der eine Vielzahl von Blättern (26) umfasst, die jeweils in einem Drehgelenk (30; 30'; 30') nach einem der Ansprüche 1 bis 8 angebracht sind.

10. Turboprop-Triebwerk (10) eines Luftfahrzeugs, umfassend wenigstens einen Propeller (24a, 24b) nach Anspruch 9.

## Claims

1. A pivot (30; 30'; 30') for an air propeller blade, the pivot comprising:
• a rotary support (36) for mounting radially on a propeller hub while being suitable for pivoting about a pivot axis (Z); and
• a blade support (38) including a housing (40) for receiving a blade root and at least one arm (34) extending laterally relative to the pivot axis and carrying a flyweight (32) forming a counterweight;
the pivot being **characterized in that** the arm and its flyweight present the general geometrical shape of a spherical cap vaulted towards the rotary support (36) with a double curvature, the arm and the flyweight having a first section that is curved in a longitudinal plane defined by the pivot axis (Z) and a direction (Y) in which the arm extends, and having a second section that is curved in a transverse plane defined by the pivot axis (Z) and a direction (X) in which the housing extends.

2. A pivot according to claim 1, wherein the arm and its flyweight have a section that is curved in a longitudinal plane and a section that is curved in a transverse plane.

3. A pivot according to claim 2, wherein each of the curved sections presents a respective radius of curvature (R_{C1}, R_{C2}) lying in the range 200 mm to 400 mm for a turboprop propeller blade, and lying in the range 700 mm to 900 mm for a propeller blade of a turboprop having two contrarotating propellers.

4. A pivot according to any one of claims 1 to 3, wherein at least the blade support is made of organic matrix composite material.

5. A pivot according to any one of claims 1 to 4, wherein the blade support comprises two opposite arms extending laterally relative to the pivot axis and each carrying a flyweight forming a counterweight.

6. A pivot according to any one of claims 1 to 5, wherein the blade support arm is connected to the housing via a portion (42) of curved profile.

7. A pivot according to any one of claims 1 to 5, wherein the blade support arm is connected to the housing via a portion (44) of rectilinear profile.

8. A pivot according to any one of claims 1 to 7, wherein the blade support housing is a socket (40) oriented in a direction (X) that is substantially perpendicular to the arm.

9. An air propeller (24a, 24b) comprising a plurality of blades (26), each mounted in a pivot (30; 30'; 30') according to any one of claims 1 to 8.

10. An aircraft turboprop (10) including at least one propeller (24a, 24b) according to claim 9.
